# DEMANDE DE BREVET EUROPEEN

(11) **EP 2 227 048 A1**
(43) Date de publication de la demande: **08.09.2010**
(21) Numéro de dépôt: 10154672.9
(22) Date de dépôt: 25.02.2010
(51) Int. Cl.: H04W 12/02, H04L 29/06, H04M 3/22

(54) **Procédé de gestion de profils d'utilisateurs d'un réseau de pairs**

(30) Priorité: 05.03.2009 FR 0951392
(71) Demandeur: France Telecom, 75015 Paris (FR)
(72) Inventeur: Neveux, Didier, 22140 Cavan (FR); Piffaretti, Ludovic, 22300 Lannion (FR); Le Lamer, Bertrand, 22560 Pleumeur Bodou (FR)

(57) **Abrégé**

L'invention concerne un procédé de gestion de profils d'utilisateurs d'un réseau de pairs, un procédé de gestion d'une session de service d'un pair et les dispositifs les utilisant. En particulier, ces procédés permettent de mettre en oeuvre une interception des flux échangés durant la session de service par un dispositif de contrôle d'un fournisseur de service afin de dupliquer et d'effectuer sur au moins une partie de ces flux des traitement tel que de la supervision.

Or, les fournisseurs de services n'ayant pas accès aux réseaux, ils ne peuvent pas intercepter ces flux alors qu'ils pourraient vouloir le faire pour ajouter des traitements en parallèle des sessions de service.

Un objet de l'invention est un procédé de gestion de profils d'utilisateurs d'un réseau de pairs comportant un déclenchement d'une interception en modifiant d'un champ d'activation d'interception inclus dans un profil d'un utilisateur obligeant un pair dudit utilisateur à se connecter audit réseau de pairs en se rattachant à un super pair d'interception, ledit super pair d'interception étant apte à dupliquer au moins une première partie d'un flux d'une session d'un service dudit pair.

## Description

L'invention concerne un procédé de gestion de profils d'utilisateurs d'un réseau de pairs, un procédé de gestion d'une session de service d'un pair et les dispositifs les utilisant. En particulier, ces procédés permettent de mettre en oeuvre une interception des flux échangés durant la session de service par un dispositif de contrôle d'un fournisseur de service afin de dupliquer et d'effectuer sur au moins une partie de ces flux des traitement tel que de la supervision.

Les techniques existantes d'interception permettant la supervision de flux échangés sont réalisées au niveau du réseau physique comme le montre la demande de brevet américaine US2005/0174937, notamment, par accès au routeur d'entrée dans le réseau. Ces techniques présentent des limites notamment lorsque l'un des utilisateurs du service est nomade car l'interception se fait sur la ligne physique et non sur les flux provenant et/ou reçus par un pair de l'utilisateur.

De plus, de nouveaux services tels que la voie sur l'internet ou VoIP sont proposés par des fournisseurs de services en utilisant des architectures physiques existantes, notamment grâce aux technologies de réseaux de pairs. Dans ces nouveaux contextes, avec les techniques telles que celle proposées par la demande de brevet américaine US2005/0174937, l'opérateur du réseau s'il est toujours apte à intercepter les flux transitant sur son réseau pour ces nouveaux services n'est pas apte à identifier les services portés par ces flux car il ne les a pas créés, ni donc à les traiter.

En outre, les fournisseurs de services n'ayant pas accès aux réseaux, ils ne peuvent pas intercepter ces flux alors qu'ils pourraient vouloir le faire pour ajouter des traitements en parallèle des sessions de service.

Un des buts de la présente invention est de remédier à des insuffisances de l'état de la technique.

Un objet de l'invention est un procédé de gestion de profils d'utilisateurs d'un réseau de pairs comportant un déclenchement d'une interception en modifiant d'un champ d'activation d'interception inclus dans un profil d'un utilisateur obligeant un pair dudit utilisateur à se connecter audit réseau de pairs en se rattachant à un super pair d'interception, ledit super pair d'interception étant apte à dupliquer au moins une première partie d'un flux d'une session d'un service dudit pair.

Ainsi, lorsqu'un pair se rattache à un super pair quelconque pour établir une session, ledit super pair lit dans le champ d'interception du profil dudit pair s'il est intercepté ou non. Si tel est le cas, le super pair quelconque renvoi le rattachement du pair au réseau vers un super pair d'interception.

Avantageusement, le procédé de gestion de profils comporte une modification (+SNI) d'un champ d'identification d'un super pair d'interception (@SNI) inclus dans un profil d'utilisateur apte à permettre audit pair (Nu₁) dudit utilisateur de se connecter audit réseau de pairs (30) en se rattachant audit super pair d'interception (SNI) en utilisant ledit champ d'identification dudit super pair d'interception (@SNI).

Ainsi, le super pair d'interception ait aisément modifiable pour chaque utilisateur du réseau de pairs.

Avantageusement, le procédé de gestion de profils comporte, lorsqu'un pair dudit utilisateur est connecté à un réseau de pairs, l'envoi audit pair en utilisant un champ d'identification dudit pair inclus dans ledit profil d'utilisateur, d'une requête d'interception obligeant ledit pair à modifier sa connexion audit réseau de pairs en se rattachant audit super pair d'interception.

Ainsi, la mise en oeuvre de l'interception ne doit pas attendre une nouvelle connexion mais est effective dès son déclenchement pour la connexion en cours.

Avantageusement, le procédé de gestion de profils comporte une occultation dudit champ d'activation d'interception (I) et/ou dudit champ d'identification d'un super pair (@SNI) apte à rendre ledit champ d'activation d'interception (I) et/ou ledit champ d'identification d'un super pair (@SNI) incompréhensible(s) de pairs distincts d'un dispositif de contrôle (10) et de pair(s) dudit utilisateur.

Ainsi, la connexion ne peut pas être interceptée par un tiers autre que le fournisseur de service et les tiers autorisé par ce fournisseur de service.

L'invention a également pour objet un programme d'ordinateur comprenant des instructions de code de programme pour l'exécution des étapes du procédé de gestion de profils lorsque ledit programme est exécuté par un processeur

L'invention a aussi pour objet un dispositif de stockage de profils d'utilisateurs d'un réseau de pairs, un profil d'un utilisateur comportant un champ d'activation d'interception (I) apte à permettre le déclenchement d'une interception obligeant un pair (Nu₁) dudit utilisateur à se connecter audit réseau de pairs (30) en se rattachant à un super pair d'interception (SNI), ledit super pair d'interception (SNI) étant apte à dupliquer au moins une première partie d'un flux d'une session d'un service dudit pair (Nu₁).

Un objet de l'invention est un procédé de gestion d'une session de service d'un pair d'un utilisateur comportant, lorsqu'un champ d'activation d'interception (I) inclus dans un profil dudit utilisateur est dans un mode intercepté (intercept ?), une connexion dudit pair à un réseau de pairs en se rattachant à un super pair d'interception, ledit super pair d'interception étant apte à dupliquer au moins une partie d'un flux d'une session d'un service dudit pair et ladite connexion étant apte à permettre le support de la session de service.

Avantageusement, la connexion dudit pair audit réseau de pairs est effectuée en se rattachant audit super pair d'interception en utilisant un champ d'identification d'un super pair d'interception (@SNI) dans une liste de super pairs dudit pair.

Ainsi, l'architecture du réseau de pair ne nécessite pas de modifications lourdes pour mettre en place l'interception.

Avantageusement, lorsque ladite session de service est supportée par une connexion dudit pair audit réseau de pairs dans un mode non intercepté, ladite connexion dudit pair audit réseau de pairs en se rattachant audit super pair d'interception est effectuée par modification de ladite connexion dudit pair audit réseau de pairs suite à la réception par ledit pair d'une requête d'interception.

Avantageusement, lorsque ladite session de service est supportée par une connexion dudit pair audit réseau de pairs en se rattachant audit super pair d'interception, au moins une première partie des flux de ladite session de service passent par ledit super pair d'interception et au moins une deuxième partie des flux de ladite session de service passent par un dispositif relais d'interception, ledit dispositif relais d'interception étant apte à dupliquer ladite deuxième partie des flux de ladite session de service.

Un autre objet de l'invention est un programme d'ordinateur comprenant des instructions de code de programme pour l'exécution des étapes du procédé de gestion d'une session d'un service lorsque ledit programme est exécuté par un processeur.

L'invention a également pour objet un pair comportant des moyens de connexion à un réseau de pairs apte, en fonction d'un champ d'activation d'interception (I) inclus dans un profil d'un utilisateur dudit pair, à obliger ledit pair (Nu₁) dudit utilisateur à se connecter audit réseau de pairs en se rattachant à un super pair d'interception, ledit super pair d'interception étant apte à dupliquer au moins une première partie d'un flux d'une session d'un service dudit pair.

L'invention a aussi pour objet un super pair d'interception apte à dupliquer au moins une première partie d'un flux d'une session d'un service d'un pair comportant des moyens de connexion dudit pair à un réseau de pairs, en fonction d'un champ d'activation d'interception (I) inclus dans un profil d'un utilisateur dudit pair, ladite connexion dudit pair avec le réseau de pairs supportant ladite session de service, et le super pair à des moyens de traitement d'un dispositif de contrôle, la connexion dudit super pair avec les moyens de traitement du dispositif de contrôle étant apte à supporter une transmission des flux dupliqués vers les moyens de traitement du dispositif de contrôle.

Un objet de l'invention est un système d'un fournisseur de service comportant des moyens de gestion de profils d'utilisateurs d'un réseau de pairs, lesdits moyens de gestion étant apte à modifier au moins un champ d'activation d'interception (I) inclus dans un profil d'un utilisateur permettant la connexion d'un pair dudit utilisateur audit réseau de pairs en se rattachant à un super pair d'interception en utilisant un champ d'identification dudit super pair d'interception, ledit super pair d'interception étant apte à dupliquer au moins une première partie d'un flux d'une session d'un service dudit pair.

Les caractéristiques et avantages de l'invention apparaîtront plus clairement à la lecture de la description, faite à titre d'exemple, et des figures s'y rapportant qui représentent :
- Figure 1, un procédé de gestion de profils d'utilisateurs d'un réseau de pairs, selon l'invention,
- Figure 2, un dispositif de stockage de profils d'utilisateurs d'un réseau de pairs, selon l'invention,
- Figure 3, un procédé de gestion d'une session de service d'un pair, selon l'invention,
- Figure 4, un schéma bloc d'un réseau de pairs dans lequel un dispositif de contrôle demande l'interception d'un service pour un pair non connecté selon l'invention,
- Figure 5, un schéma bloc d'un réseau de pairs dans lequel un dispositif de contrôle demande l'interception d'un service pour un pair déjà connecté au service selon l'invention,
- Figure 6, un schéma bloc illustrant l'interception des flux de signalisation d'un service selon l'invention,
- Figure 7, un schéma bloc illustrant l'interception des flux média d'un service selon l'invention.

L'invention permet de pratiquer une interception d'un service sur un réseau de pairs tel que la VoIP dans différentes configurations, notamment une session entre des membres de ce réseau de pairs et une session entre au moins un membre de ce réseau de pairs et au moins un membre d'un autre réseau (par exemple via une passerelle d'interconnexion ou gateway en anglais).

L'invention repose sur une étape d'établissement de l'interception dans laquelle le pair intercepté est informé du fait qu'il doit se rattacher à un super pair (ou super node en anglais) spécifique: un super pair d'interception pour se connecter au réseau de pair. Le pair intercepté est alors considéré comme un pair ordinaire (ou ordinary node en anglais) par le réseau de pairs l'obligeant à se rattacher à un super pair d'interception pour se connecter au réseau de pairs. Le super pair d'interception est un super pair spécifique apte à dupliquer au moins une première partie des flux d'une session d'un service d'un pair intercepté.

De manière assez classique, les super pairs d'interception sont indiqués dans la liste de super pairs disponible sur les super pairs du réseau de pairs et à partir de laquelle les pairs du réseau de pairs mettent à jour leur liste de super pairs en local.

Par exemple, le fournisseur de service à l'origine de l'interception introduit dans le réseau de pairs un pair ayant les paramètres de connexion nécessaire à l'obtention du statut de super pair et disposant des moyens de duplication utile à l'interception. Du fait de ses paramètres de connexion, ce pair obtiendra le statut de super pair et figurera sur la liste des super pairs disponibles sur tous les supers pairs du réseau de pair y compris ce super pair d'interception. Et tout pair dont la liste locale de super pairs est mise à jour disposera dans sa liste de super pairs locale de ce super pair d'interception.

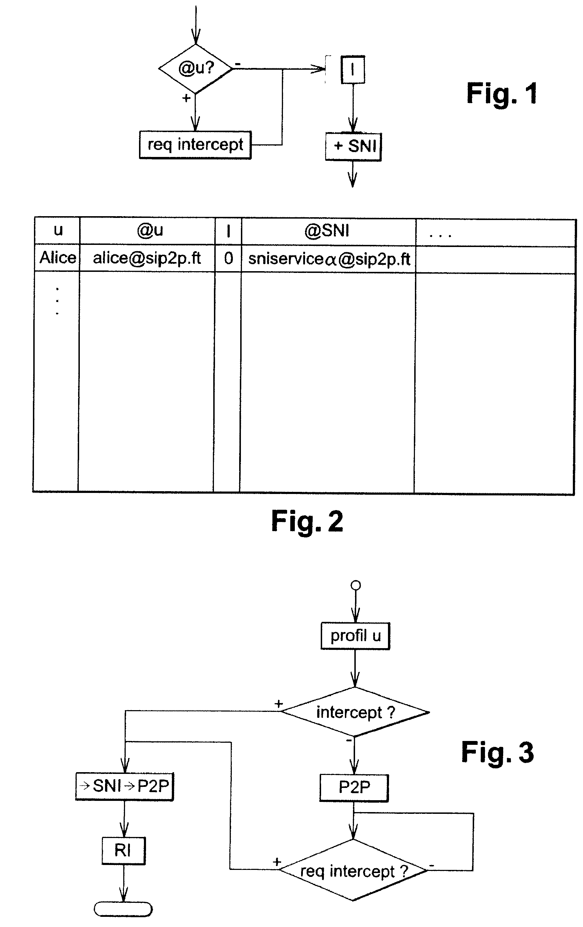

La figure 1 illustre un procédé de gestion de profils d'utilisateurs d'un réseau de pairs. Ces profils sont stockés dans un dispositif de stockage 31 tel que celui illustré par la figure 2 qui est par exemple une base de données stockée dans un dispositif unique tel qu'un dispositif d'authentification, un dispositif du fournisseur de service, etc. ou répartie dans le réseau de pairs (par exemple sur les super pairs de ce réseau de pairs).

Lors d'une interception d'un service d'un utilisateur u, le procédé de gestion de profils d'utilisateurs d'un réseau de pairs est alors basé sur le déclenchement d'une interception en modifiant +I un champ d'activation d'interception I dans le profil de l'utilisateur u. Ainsi, le fournisseur de service peut avoir prévu pour l'utilisateur u un super pair d'interception SNI dès son adhésion au réseau de pairs et en déclencher l'utilisation plus tard, pour des besoins de surveillance d'un service par exemple, en basculant un champ d'activation de "off" sur "on" ou d'un bit 0 à un bit 1 par exemple.

De manière générale, le pair retrouvera l'adresse d'un super pair d'interception dans la liste de super pairs dont il dispose en local ou par requête auprès d'un super pair de cette liste locale. Les super pairs du réseau de pairs disposant de l'adresse d'au moins un super pair d'interception dans leur liste de super pairs. Afin d'accéder facilement à l'adresse d'un super pair d'interception dans une liste de super pairs, la liste peut être divisée en deux sous liste une sous liste de super pairs non spécifiques et une sous liste de super pair d'interception.

Dans une première variante, une première étape est de vérifier si l'utilisateur u est déjà connecté au réseau de pairs, par exemple en consultant dans son profil son adresse @u. Si l'adresse @u est renseignée +, l'utilisateur u est connecté. Cette information peut être transmise au demandeur de l'interception pour lui signaler un flux de service d'un pair de l'utilisateur u auquel il n'a pas accès.

Une deuxième variante de l'invention prévoit, si l'utilisateur u est déjà connecté +, l'émission d'une requête d'interception au pair de l'utilisateur u en utilisant l'adresse indiqué dans le champ adresse @u inclus dans son profil. La requête d'interception req intercept indique au pair de l'utilisateur u que celui doit modifier sa connexion au réseau de pairs en se rattachant à un super pair spécifique appelé super pair d'interception SNI. La requête d'interception peut être transmise directement au pair ou via son super pair (super pair non spécifique).

Dans toutes ces variantes, le rattachement au super pair d'interception SNI pour se connecter au réseau de pairs entrainera la déconnexion de l'utilisateur u puis sa reconnexion au réseau de pairs.

Dans une troisième variante, le procédé de gestion de profils comporte la modification +SNI d'un champ d'identification d'un super pair d'interception @SNI inclus dans le profil de l'utilisateur u permettant ainsi de renseigner le pair de l'utilisateur u sur le super pair d'interception SNI auquel il doit se rattacher pour se connecter au réseau de pairs, voir de modifier le super pair d'interception SNI pour diverses raisons changement du traitement nécessitant une interception et/ou du demandeur d'une interception (fournisseur de service, opérateur au fournisseur de service, etc.). Ainsi, les liste de super pairs ne comporte pas nécessairement de super pair d'interception, et le pair récupère cette information dans son profil lors de sa connexion au réseau de pairs voire dans la requête d'interception.

Cette troisième variante peut être mise en oeuvre également en combinaison avec la première ou la deuxième variante de l'invention.

La figure 2 illustre une base de données des profils d'utilisateurs d'un réseau de pairs comportant pour chaque utilisateur u plusieurs champs dont au moins un champ d'activation d'interception I. Dans les première et deuxième variantes de l'invention, un profil comporte un champ d'adresse utilisateur @u avec l'adresse d'au moins un pair de l'utilisateur connecté au réseau de pairs. Dans la troisième variante de l'invention, le profil comporte un champ d'identification d'un super pair d'interception @SNI.

Dans notre exemple, un utilisateur "alice" est connecté au réseau de pairs avec un pair ayant pour adresse "alice@sip2p.ft". Son super pair d'interception SNI a pour adresse "sniserviceα@sip2p.ft". L'utilisateur "alice" est connecté en mode non intercepté (bit 0 dans le champ d'activation d'interception I).

Dans une quatrième variante de l'invention, le(s) champ(s) lié(s) à l'interception: champ d'activation d'interception I et/ou, le cas échéant, champ d'identification d'un super pair d'interception @SNI sont occultés soit par anonymisation, soit par masquage, soit par chiffrage, soit par brouillage, etc. Ainsi, seuls les dispositifs de contrôle de l'interception et traitement des flux interceptés, tels qu'un dispositif de contrôle appartenant au fournisseur de service souhaitant superviser certains flux de son service en lien avec un pair ou à un tiers tels que un opérateur du réseau utilisé par le service ou un organisme de surveillance souhaitant supervisés certains flux de services d'un pair, sont aptes à lire et modifier ce(s) champ(s) lié(s) à l'interception. Les pairs des réseaux de pairs distincts d'un dispositif de contrôle peuvent simplement utiliser le(s) champ(s) lié(s) à l'interception inclus dans leur profil d'utilisateur ou d'une requête d'interception pour se connecter au réseau de pairs, sinon ce(s) champ(s) lié(s) à l'interception leur sont incompréhensible(s), indétectable(s).

La figure 3 illustre un procédé de gestion d'une session de service d'un pair dans un réseau de pairs basé sur le rattachement dudit pair à un super pair d'interception SNI pour se connecter à un réseau de pairs **→SNI→P2P,** cette connexion supportant la session de service du pair.

Dans une variante de l'invention,
**profil u :** un pair d'un utilisateur souhaitant se connecter à un réseau de pairs pour ouvrir une session d'un service consulte son profil d'utilisateur du réseau de pairs pour le compléter en y inscrivant son adresse @u, notamment son adresse IP.
**intercept ?:** Si le champ d'activation d'interception I est sur "on", le pair se comporte comme un pair ordinaire et se rattache au super pair d'interception SNI indiqué dans le champ d'identification d'un super pair d'interception @SNI, de manière non exhaustive, inclus dans une liste de super pairs ou dans un profil de l'utilisateur du pair pour se connecter au réseau de pairs **→SNI→P2P.** Sinon, il se rattache en mode non intercepté au réseau de pairs P2P: soit en se rattachant à un super pair non spécifique, soit à son proxy etc., soit en se connectant directement au réseau de pairs **→P2P**.

Dans la deuxième variante de l'invention, si l'utilisateur est déjà connecté lorsque son profil est modifié pour déclencher une interception, le pair de l'utilisateur u reçoit une requête d'interception. **Req intercept ? :** Dès réception d'une requête d'interception par le pair de l'utilisateur, le pair modifie sa connexion **→SNI→P2P** au réseau de pairs en se rattachant au super pair d'interception SNI indiqué dans la requête d'interception pour se connecter au réseau de pairs.

Une alternative à cette requête d'interception **Req intercept ?** est une requête comportant une commande de modification de rattachement au réseau de pairs. Ainsi, dès réception de la requête d'interception par le pair de l'utilisateur, le pair va récupérer, de manière non exhaustive, en local (dans sa liste de super pairs), auprès de son super pair de rattachement ou dans son profil d'utilisateur l'adresse valide d'un super pair d'interception SNI et modifie sa connexion **→SNI→P2P** au réseau de pairs en se rattachant à ce super pair d'interception SNI pour se connecter au réseau de pairs.

Ainsi une première partie du flux du service du pair intercepté est dupliquée par le super pair d'interception SNI et, le cas échéant, transmis à un dispositif de traitement et/ou de supervision (en particulier contrôle parentale, modérateur, toute autre autorité, etc.). Dans le cas d'un service de voix sur Internet VoIP, cette première partie de flux correspond en particulier au flux de signalisation.

Dans une cinquième variante de l'invention, **RI:** une deuxième partie du flux du service du pair intercepté est dupliquée par le super pair d'interception SNI ou un dispositif relais et, le cas échéant, transmis à un dispositif de traitement et/ou de supervision. Dans le cas d'un service de voix sur Internet VoIP, cette deuxième partie de flux correspond en particulier au flux média et soit le super pair d'interception SNI joue aussi le rôle de dispositif relais média d'interception soit le dispositif relais est un dispositif relais média d'interception.

Dans une variante de l'invention seule ou en combinaison avec l'une quelconque des variantes précédentes, lorsque un pair se connecte au réseau de pairs en mode intercepté, c'est-à-dire se rattache à un super pair d'interception SNI pour se connecter au réseau de pair, il bloque toute procédure interne de tentative de passage de l'état de pair ordinaire à l'état de super pair au moins pendant la session en cours. Ainsi, il ne pourra modifier sa connexion au réseau de pairs et se soustraire à l'interception en se connectant directement au réseau de pairs suite à une modification de son statut de pair.

Les figures suivantes illustrent l'invention dans le cas particulier de session d'appel de voix sur Internet VoIP utilisant le protocole SIP.

De manière classique, un appel VoIP s'appuyant sur une architecture de réseau de pairs 30 se déroule de la manière suivante:
- un téléphone par exemple lance une demande de connexion à partir de l'adresse SIP du pair N₁u₃ du destinataire,
- un pair ordinaire Nu₁ de rattachement de ce téléphone contenant la fonction proxy SIP relaie cette demande vers le proxy SIP hébergé sur un super pair non spécifique SN₁,
- le super pair SN₁ interroge le réseau de pairs 30 pour trouver l'adresse IP du pair N₁u₃ du destinataire,
- la requête est ensuite relayée vers le proxy SIP hébergé sur le super pair non spécifique SN₃ du destinataire, lequel relaie au terminal destinataire N₁u₃,
- lequel répond qu'il accepte l'appel

Le flux média est établit. Le client SIP, c'est-à-dire le générateur de l'appel, est en particulier constitué par un programme d'ordinateur porté dans le pair ordinaire Nu₁ pour l'appelant et par le pair du destinataire N1 u3.

Dans certains cas (non illustrés), le pair destinataire est SN₃ et N1 u3 est seulement le terminal portant le client SIP permettant au pair SN₃ de dialoguer avec le pair émetteur Nu₁.

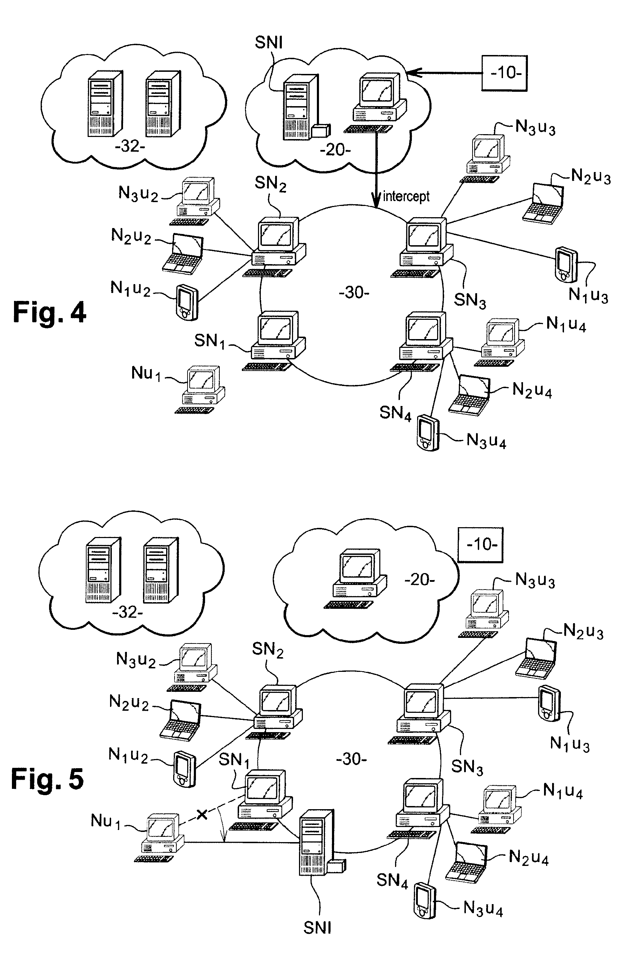

La figure 4 illustre un dispositif de contrôle 10 demandant l'interception d'un service pour un pair Nu₁ non connecté à un réseau de pairs 30.

Dans l'exemple de notre figure 4, le réseau de pairs 30 est illustré par quatre de ces utilisateurs disposant pour l'utilisateur u₁ d'un pair ordinaire Nu₁ apte à se connecter au réseau de pairs 30 en se rattachant à un super pair SN₁, pour l'utilisateur u₂ de trois pairs ordinaires N₁u₂, N₂u₂, et N₃u₂ aptes à se connecter au réseau de pairs 30 en se rattachant à un super pair SN₂, pour l'utilisateur u₃ de trois pairs ordinaires N₁u₃, N₂u₃, et N₃u₃ aptes à se connecter au réseau de pairs 30 en se rattachant à un super pair SN₃ et pour l'utilisateur u₄ de trois pairs ordinaires N₁u₄, N₂u₄, et N₃u₄ aptes à se connecter au réseau de pairs 30 en se rattachant à un super pair SN₄.

Chaque super pair peut aussi se comporter comme un pair et donc porter d'autres utilisateurs pour lesquels pairs et super pairs sont confondus. A titre d'exemple d'illustration et pour simplifier la compréhension de l'invention, les pairs d'un même utilisateur sont connectés, par hypothèse, au même super pair.

Lors de la connexion au réseau de pairs 30, les utilisateurs sont authentifiés par un dispositif d'authentification 32. Le système du fournisseur de service 20 utilisant le réseau de pairs 30 pour fournir son service à un pour plusieurs des utilisateurs de ce réseau de pairs 30 comporte un dispositif de gestion de profils d'utilisateurs du réseau de pairs (non illustré).

Le dispositif de contrôle 10 fournit l'identifiant SIP de l'utilisateur à intercepter ou tout autre paramètre permettant au système d'un fournisseur de service 20 de mettre en oeuvre l'interception à partir de cet identifiant SIP. Dans notre exemple, l'utilisateur à intercepter est "alice" et son identifiant est "alice@sip2p.fr". Le dispositif de contrôle 10 est soit intégré dans le système du fournisseur de service 20 soit dans un système d'un tiers tels qu'un opérateur du réseau utilisé par le service ou un organisme de surveillance souhaitant supervisés certains flux de services d'un pair.

L'utilisateur intercepté est sur un pair Nu₁ forcé dans un statut de pair ordinaire afin qu'il doive se rattacher à un super pair pour se connecter au réseau de pairs 30. Dans le cas de la figure 4, en mode non intercepté, le pair Nu₁ se rattache au super pair SN₁ pour se connecter au réseau de pairs 30.

Un pair tel que Nu₁ est, en mode non intercepté, en fonction des paramètres de sa connexion dans un statut soit de pair soit de super pair. Le statut de super pair n'est pas intrinsèque et est un statut non permanent.

De base, dans le réseau de pairs 30, le profil d'un utilisateur est stocké dans un dispositif de stockage 31 illustré par la figure 2. A minima, ce profil consiste en l'information d'adresse "alice@sip2p.fr"d'un pair de l'utilisateur Nu₁.

Pour permettre l'interception, au moins un champ est ajouté à ce profil en particulier un champ d'activation d'interception I. Un dispositif de gestion de profils d'utilisateur (non illustré) d'un réseau de pairs hébergé notamment dans le système d'un fournisseur de service 20 peut forcer, grâce à une demande d'interception intercept, le champ d'activation d'interception I à une valeur, tel que "on", déclenchant une interception sur requête du dispositif de contrôle 10.

Le dispositif de gestion de profils d'utilisateur peut aussi être porté par le réseau de pair 30. L'hébergement de ce dispositif de gestion de profils d'utilisateurs chez le système d'un fournisseur de service 20 se justifie en particulier pour un grand nombre d'utilisateurs fréquemment non actifs car le maintien de leur profil dans le réseau de pairs alourdit le système. En outre, une variante de l'hébergement du dispositif de gestion de profils d'utilisateur dans le système d'un fournisseur de service 20 peut servir de sauvegarde.

Un champ d'activation d'interception I est chiffrée et ajoutée au profil et un super pair d'interception est inclus dans la liste des super pairs disponible soit en locale sur le pair soit sur les super pairs du réseau de pairs Le super pair d'interception SNI est soit contrôlé par le dispositif de contrôle 10, soit apte à dupliquer au moins une première partie des flux de service du pair et à les transmettre à des moyens de traitement, tels qu'une plateforme de traitement, contrôlée par le dispositif de contrôle 10.

Dans le cas illustré par la figure 4, le pair n'est pas connecté au réseau de pairs 30, donc n'est pas connecté au service de VoIP. Lorsqu'Alice ou plutôt le pair d'Alice Nu₁ vient se connecter au réseau de pairs 30 (en particulier en se rattachant à un super pair quelconque), il va compléter son profil d'utilisateur 31 (non illustré sur la figure 4) notamment en y inscrivant son adresse IP après avoir été authentifié par le dispositif d'authentification 32. Là, le pair Nu₁ constatera qu'il fait l'objet d'une interception puisque le champ d'activation d'interception I inclus dans son profil est sur "on". II va donc charger au moins une adresse d'un super pair d'interception SNI lue dans le champ d'identification d'un super pair d'interception @SNI de la liste de super pairs. Il reprendra alors le mécanisme de connexion au réseau de pairs en se positionnant en tant que pair ordinaire, c'est-à-dire en se rattachant à un super pair pour se connecter au réseau de pairs 30, en l'occurrence au super pair d'interception SNI identifié par son adresse ou à l'un des super pairs d'interception si plusieurs sont identifiés dans la liste de super pairs (en particulier, s'il était rattaché à un super pair quelconque pour compléter son profil, le super pair quelconque renvoi le rattachement vers le super pair d'interception). En outre, le pair Nu₁ aura intégré son statut "intercepté" et bloqué toute procédure de passage à l'état de super pair pendant au moins la session en cours.

En revanche, comme l'illustre la figure 5, si "Alice" (un de ses pairs Nu₁) est déjà connectée au réseau de pairs 30 lorsque le dispositif de contrôle 10 souhaite activer son interception, le dispositif de gestion de profils d'utilisateur (non illustré) le constatera lors de la modification du profil car le profil d"'Alice" indiquera un adresse IP valide @u, c'est-à-dire non nulle, le champ d'adresse utilisateur @u sera renseigné.

Dans un premier temps, le dispositif de contrôle 10 ou le dispositif de gestion de profils d'utilisateur (non illustré) par délégation modifiera le profil d"'Alice" comme indiqué précédemment. Dans un deuxième temps, le dispositif de contrôle 10 ou le dispositif de gestion de profils d'utilisateur (non illustré) par délégation indiquera au pair d"'Alice" Nu₁ soit directement notamment si Nu1 est un super pair, soit via son super pair non spécifique SN₁ (super pair de rattachement au réseau de pairs en mode non intercepté) en utilisant l'adresse @u lue dans le profil de se mettre en mode intercepté. Pour cela, la requête d'interception pourra comporter l'adresse d'un super pair d'interception SNI.

Par exemple, le mécanisme peut être tel que si la requête initiale du dispositif de contrôle 10 comporte une adresse d'un super pair d'interception SNI, la requête d'interception comportera elle aussi cette adresse du super pair d'interception SNI. Sinon, la requête d'interception ne comportera pas d'adresse de super pair d'interception et à la réception de cette requête d'interception, le pair Nu1 vérifiera dans sa liste locale de super pair si elle comporte l'adresse d'un super pair d'interception SNI voire interrogera, le cas échéant, son super pair de rattachement pour récupérer l'adresse d'un super pair d'interception SNI.

Le pair Nu₁ sollicitera son rattachement au super pair d'interception SNI (en trait plein) et coupera alors sa connexion avec son super pair de rattachement SN1 (trait en pointillé barré).

Les super pairs d'interception pourront n'accepter que le rattachement de pair en mode "intercepté" (par exemple en contrôlant leur profil).

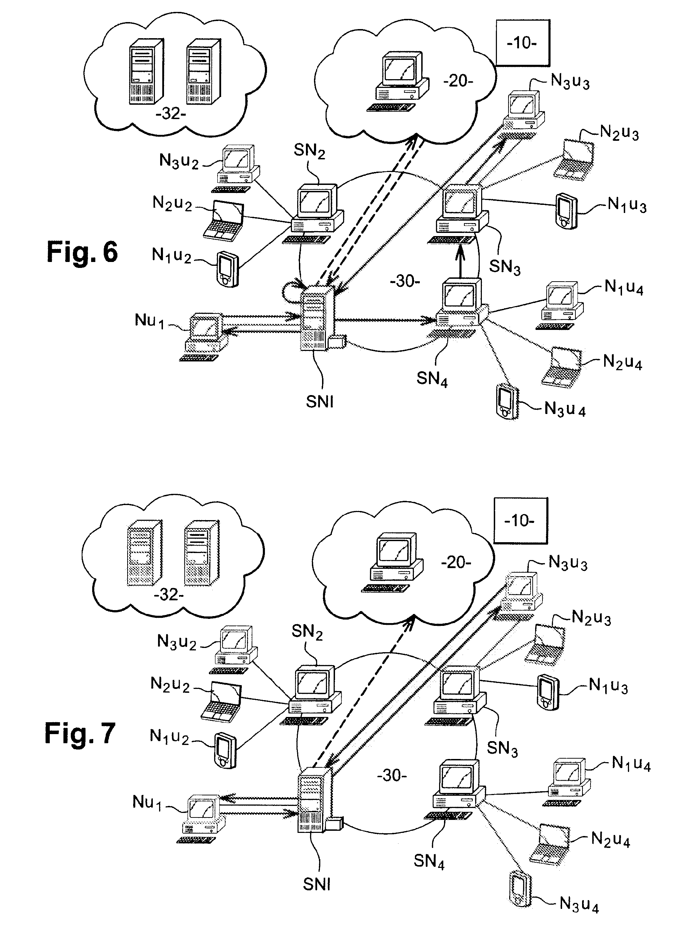

La figure 6 illustre les échanges de flux de signalisation SIP dans un réseau de pairs 30, suite une ouverture de session de service d'un pair Nu₁ en mode intercepté, dans le cas ou le SNI effectue sa duplication des flux sur le mode d'un pont de conférence. Le pair Nu₁ étant raccordé à un super pair d'interception SNI, le super pair d'interception SNI à accès à tous les flux de signalisation SIP. Le super pair d'interception SNI duplique alors tous les flux (flèche en pointillé) vers une plateforme associée au dispositif de contrôle 10.

Tout d'abord, le pair Nu₁ envoie à son super pair SNI une invitation SIP pour l'établissement de l'appel avec l'adresse SIP de N3u3 en destinataire (flèche en trait plein de Nu1 à SNI). Le réseau de pair 30 recherche le profil de N₃u₃ pour obtenir son @ IP et retourne cette information à SNI (non illustré). S'en suit la mise ne place du pont de conférence (flèche en trait plein de SNI vers lui-même), le lancement par le super pair d'interception SNI d'une invitation pour établir une session de communication avec le dipositif de contrôle 10 (flèche en pointillé de SNI vers 20), et l'acceptation de l'appel par le dispositif de contrôle 10 (flèche en pointillé de 20 vers SNI).

A ce stade, le super pair d'interception SNI ayant mis en place l'interception par la conférence, il relaie l'invitation initiale vers le super pair SN₃ du destinataire N₃u₃ (flèche en trait plein de SNI vers SN₃), qui la relaie vers le destinataire N₃u₃ (flèche en trait plein de SN₃ vers N₃u₃). Le destinataire N₃u₃ accepte la session (flèche en trait plein de N₃u₃ vers SNI et flèche en trait plein de SNI vers Nu₁).

L'étape suivante est de donner aussi accès aux flux média (flux portant notamment de la voix et/ou de la vidéo et/ou de la messagerie instantanée et/ou des fichiers et/ou des données, etc.). Dans certaines configurations réseau, le flux média est amené à être routé via un dispositif relai média (pour la traversée de NAT, de proxy, l'optimisation de la qualité de service...) L'idée est de faire croire au pair intercepté Nu₁ qu'il se trouve dans l'une de ces situations en modifiant et verrouillant les paramètres internes gérant ces informations dans le pair Nu₁. La figure 7 illustre cette situation dans le cas particulier où le super pair d'interception SNI fait aussi office de dispositif relai média.

Dans une variante de l'invention, le dispositif relai média peut être localisé sur un pair distinct du super pair d'interception SNI.

Le relai média d'interception gère une liaison bidirectionnelle avec chaque pairs Nu₁, N₃u₃ participants à la session de service (liaison existante en mode non intercepté), et une liaison monodirectionnelle vers la plateforme associée au dispositif de contrôle 10. Le flux de la liaison monodirectionnelle est en particulier dans le cas d'un service VoIP un flux mixant les 2 sens de conversation entre l'appelant et l'appelé ou deux flux un pour chaque sens de conversation.

Un mode particulier d'implémentation de cette liaison monodirectionnelle est l'utilisation des moyens de conférences du dispositif relai média SNI: ainsi les pairs des participants à la session de service et la plateforme sont considérés comme participants à une conférence supportant le service dont le pont serait le dispositif relai média.

Un mode particulier d'implémentation est lorsque Nu1 est déjà connecté au réseau de pair (déjà vu en figure 5) mais également en cours de conversation. Le basculement de super pair se déroule comme indiqué précédemment, mais il se couple alors d'un basculement du relai média en cours vers un relai média d'interception selon le mode normal de changement de relai média en cours de conversation. Pour ce faire, en sus de l'adresse de SNI, il faut aussi fournir à Nu1 l'adresse d'un relai média d'interception. De façon optimale, SNI assure ce rôle de relai média.

Dans une autre variante, lorsque Nu1 est connecté au réseau de pairs, la requête d'interception issue de 10 (figure 4) se fait en direction du SN1. SN1 fournit alors une adresse d'un SNI valide à Nu1 pour lui dire de s'y connecter car SN1 simule alors vis-à-vis de Nu1 une phase similaire à un départ du réseau de pairs. En effet, lors SN1 quitte normalement le réseau de pairs, SN1 avertit tous les pairs qui lui sont raccordés de façon à ce que ce départ se déroule sans perturber ces pairs simples.

## Revendications

1. Procédé de gestion de profils d'utilisateurs d'un réseau de pairs comportant un déclenchement d'une interception en modifiant (+I) d'un champ d'activation d'interception (I) inclus dans un profil d'un utilisateur obligeant un pair (Nu₁) dudit utilisateur à se connecter audit réseau de pairs (30) en se rattachant à un super pair d'interception (SNI), ledit super pair d'interception (SNI) étant apte à dupliquer au moins une première partie d'un flux d'une session d'un service dudit pair (Nu₁).

2. Procédé de gestion de profils selon la revendication précédente **caractérisé en ce qu'**il comporte une modification (+SNI) d'un champ d'identification d'un super pair d'interception (@SNI) inclus dans d'un profil d'utilisateur apte à permettre audit pair (Nu₁) dudit utilisateur de se connecter audit réseau de pairs (30) en se rattachant audit super pair d'interception (SNI) en utilisant ledit champ d'identification dudit super pair d'interception (@SNI).

3. Procédé de gestion de profils selon l'une quelconque des revendications 1 ou 2 **caractérisé en ce qu'**il comporte, lorsqu'un pair (Nu₁) dudit utilisateur est connecté (@u?) à un réseau de pairs (30), l'envoi audit pair (Nu₁), en utilisant un champ d'identification dudit pair (@u) inclus dans ledit profil d'utilisateur, d'une requête d'interception (req intercept) obligeant ledit pair (Nu₁) à modifier sa connexion audit réseau de pairs (30) en se rattachant audit super pair d'interception (SNI).

4. Procédé de gestion de profils selon l'une quelconques des revendications 1 à 3 **caractérisé en ce qu'**il comporte une occultation dudit champ d'activation d'interception (I) et/ou dudit champ d'identification d'un super pair (@SNI) apte à rendre ledit champ d'activation d'interception (I) et/ou ledit champ d'identification d'un super pair (@SNI) incompréhensible(s) de pairs distincts d'un dispositif de contrôle (10) et de pair(s) dudit utilisateur.

5. Programme d'ordinateur comprenant des instructions de code de programme pour l'exécution des étapes du procédé de gestion de profils selon l'une quelconque des revendications 1 à 4 lorsque ledit programme est exécuté par un processeur

6. Dispositif de stockage de profils d'utilisateurs d'un réseau de pairs, un profil d'un utilisateur comportant un champ d'activation d'interception (I) apte à permettre le déclenchement d'une interception obligeant un pair (Nu₁) dudit utilisateur à se connecter audit réseau de pairs (30) en se rattachant à un super pair d'interception (SNI), ledit super pair d'interception (SNI) étant apte à dupliquer au moins une première partie d'un flux d'une session d'un service dudit pair (Nu₁).

7. Procédé de gestion d'une session de service d'un pair d'un utilisateur comportant, lorsqu'un champ d'activation d'interception (I) inclus dans un profil dudit utilisateur est dans un mode intercepté (intercept ?), une connexion (**→**SNI**→**P2P) dudit pair (Nu₁) à un réseau de pairs (30) en se rattachant à un super pair d'interception (SNI), ledit super pair d'interception (SNI) étant apte à dupliquer au moins une partie d'un flux d'une session d'un service dudit pair (Nu₁) et ladite connexion étant apte à permettre le support de la session de service.

8. Procédé de gestion d'une session de service selon la revendication précédente **caractérisé en ce que** ladite connexion (**→**SNI**→**P2P) est établie en utilisant un champ d'identification d'un super pair d'interception (@SNI) dans une liste de super pairs dudit pair.

9. Procédé de gestion d'une session d'un service selon l'une quelconque des revendications 7 ou 8 **caractérisé en ce que,** lorsque ladite session de service est supportée par une connexion dudit pair (Nu₁) audit réseau de pairs (30) dans un mode non intercepté (P2P), ladite connexion (**→**SNI**→**P2P) dudit pair (Nu₁) audit réseau de pairs (30) en se rattachant audit super pair d'interception (SNI) est effectuée par modification de ladite connexion dudit pair (Nu₁) audit réseau de pairs (30) suite à une réception par ledit pair (Nu₁) d'une requête d'interception (req intercept ?).

10. Procédé de gestion d'une session d'un service selon l'une quelconque des revendications 7 à 9 **caractérisé en ce que,** lorsque ladite session de service est supportée par une connexion (**→**SNI**→**P2P) dudit pair (Nu₁) audit réseau de pairs (30) en se rattachant audit super pair d'interception (SNI), au moins une première partie des flux de ladite session de service passent par ledit super pair d'interception (SNI) et au moins une deuxième partie des flux de ladite session de service passent par un dispositif relais d'interception (RI), ledit dispositif relais d'interception étant apte à dupliquer ladite deuxième partie des flux de ladite session de service.

11. Programme d'ordinateur comprenant des instructions de code de programme pour l'exécution des étapes du procédé de gestion d'une session d'un service selon l'une quelconque des revendications 7 à 10 lorsque ledit programme est exécuté par un processeur

12. Pair comportant des moyens de connexion à un réseau de pairs (30) apte, en fonction d'un champ d'activation d'interception (I) inclus dans un profil d'un utilisateur dudit pair, à obliger ledit pair (Nu₁) dudit utilisateur à se connecter audit réseau de pairs (30) en se rattachant à un super pair d'interception (SNI), ledit super pair d'interception (SNI) étant apte à dupliquer au moins une première partie d'un flux d'une session d'un service dudit pair (Nu₁).

13. Super pair d'interception apte à dupliquer au moins une première partie d'un flux d'une session d'un service d'un pair (Nu₁) comportant des moyens de connexion apte à connecter ledit pair (Nu₁) à un réseau de pairs (30) en fonction d'un champ d'activation d'interception (I) inclus dans un profil d'un utilisateur dudit pair, ladite connexion dudit pair (Nu₁) avec le réseau de pairs (30) supportant ladite session de service, et le super pair (SNI) à des moyens de traitement d'un dispositif de contrôle (10), la connexion dudit super pair (SNI) avec les moyens de traitement du dispositif de contrôle (10) étant apte à supporter une transmission des flux dupliqué vers les moyens de traitement du dispositif de contrôle.

14. Système d'un fournisseur de service comportant des moyens de gestion de profils d'utilisateurs d'un réseau de pairs, lesdits moyens de gestion étant apte à modifier au moins un champ d'activation d'interception (I) inclus dans un profil d'un utilisateur permettant la connexion d'un pair (Nu₁) dudit utilisateur audit réseau de pairs (30) en se rattachant à un super pair d'interception (SNI), ledit super pair d'interception (SNI) étant apte à dupliquer au moins une première partie d'un flux d'une session d'un service dudit pair.
